# EUROPÄISCHE PATENTANMELDUNG

(11) **EP 1 152 511 A1**
(43) Veröffentlichungstag der Anmeldung: **07.11.2001**
(21) Anmeldenummer: 00109604.9
(22) Anmeldetag: 05.05.2000
(51) Int. Cl.: H02H 9/04

(54) **Vorrichtung und Schaltung zum Schutz von gleichspannungsversorgten Einrichtungen vor Überspannungen**

(71) Anmelder: TELEFONAKTIEBOLAGET LM ERICSSON (publ), 126 25 Stockholm (SE)
(72) Erfinder: Meyer, Horst, 31061 Alfeld (DE)
(74) Vertreter: Mohsler, Gabriele

(57) **Zusammenfassung**

Die Erfindung betrifft eine Vorrichtung und eine Schaltung zum Schutz von gleichspannungsversorgten Einrichtungen vor Überspannungen.

Die Erfindung ermöglicht den Einsatz Strom-und-spannungsabhängiger-Schalter, deren Einsatz zum Schutz vor Überspannungen bisher auf wechselspannungsversorgte Einrichtungen beschränkt war, für gleichspannungsversorgten Einrichtungen.

Dazu werden Strom-und-spannungsabhängiger-Schalte mit Varistoren in Reihe geschaltet.

Die Varistoren werden so gewählt, daß ihre Schwellspannung unterhalb der Nennspannung liegt und daß bei Nennspannung der Strom durch die Varistoren unterhalb des Haltestromes des Strom-und-spannungsabhängiger-Schalters liegt.

## Beschreibung

Die Erfindung betrifft Vorrichtungen und Schaltungen zum Schutz vor transienten Überspannungen für gleichspannungsversorgte Einrichtungen.

Einrichtungen, die leitungsgebunden mit elektrischer Energie versorgt werden, sind unter Umständen von plötzlichen Überspannungen betroffen. Derartige Transienten können beispielsweise durch Abschalten von starken induktiven Lasten oder durch Blitzschlag hervorgerufen werden. Überspannungen können zu Beschädigungen an elektrischen Einrichtungen führen. Der verstärkte Einsatz von integrierten Halbleiterbauelementen, die besonders empfindlich auf Überspannungen reagieren, hat einen steigenden Bedarf an Vorrichtungen zum Schutz vor Überspannungen erzeugt.

An Schutzvorrichtungen gegen Beschädigungen durch Überspannungen sind unter anderem folgende Anforderungen zu stellen, niedrige Reaktionszeit, hohe Ableitungsleistung und geringer Energieverbrauch. Eine günstige Eigenschaft einer Schutzvorrichtung ist eine steile Strom über Spannungskennlinie oberhalb einer definierten Spannung.

Im Stand der Technik werden verschiedene Bauteile zum Schutz vor Überspannungen eingesetzt.

Suppressor-Dioden bieten extrem kurze Reaktionszeiten von weniger als 1 Nanosekunde. Sie sind aber in ihrer Ableitleistung begrenzt. Der Einsatz von Suppressor Dioden sowie ihre technischen Merkmale werden zum Beispiel in den Richtlinien für die Anwendung von Transient Voltage Suppressors des Herstellers UNITRODE beschrieben.

Varistoren haben den Vorteil einer sehr hohen Ableitleistung, die Reaktionszeit liegt jedoch im Bereich von circa 1-100 Nanosekunden. Ein weiterer Nachteil ist die, im Vergleich zu anderen Bauteilen, relative flache Kennlinie von Varistoren. Varistoren und ihre technischen Merkmale werden beispielsweise im Datenbuch SIOV Metalloxid Varistoren, Ausgabe 1997, der Firma EPCOS beschrieben.

Strom-und-spannungsabhängige-Schalter, im weiteren SSS genannt, haben die Vorteile einer sehr schnellen Reaktionszeit bei einer hohen Ableitleistung und einer extrem steilen Kennlinie. Der Nachteil von SSS ist, daß sie, solange ein Haltestrom durch das Bauelement fließt, nicht selbstlöschend sind. Dies bedeutet, daß ein einmal gezündeter SSS in einer Gleichspannungsversorgung nicht selbstätig in einen hochohmigen Zustand zurückkehrt. SSS werden daher in erster Linie in Wechselspannungsversorgungen eingesetzt, in denen der alternierende Spannungspegel ein Unterschreiten des Haltestromes, und somit die Rückkehr des SSS in einen hochohmigen Zustand, bewirkt.

SSS, ihre technischen Merkmale und eine Einsatzmöglichkeit zum Schutz vor Überspannungen werden unter anderem im US Patent 4 685 120 beschrieben. SSS werden beispielsweise unter der Marke SIDACtor™ von der Firma Teccor und unter der Marke TRISIL™ von der Firma STMicroelektronics vertrieben.

Demgemäß ist es Aufgabe der Erfindung, eine Vorrichtung zum Schutz vor Überspannungen in einer Gleichspannungsversorgung zur Verfügung zu stellen, die eine kurze Reaktionszeit, eine hohe Ableitungsleistung und eine selbsttätige Löschung aufweist.

Dies wird erfindungsgemäß gelöst durch die Lehre der Patentansprüche 1 und 11.

Vorteilhaft ist die Reihenschaltung der ersten und der zweiten funktionellen Einheit. Diese Kombination ergibt eine selbstlöschende Schutzvorrichtung mit einer sehr steilen Strom über Spannungkennlinie oberhalb einer definierten Spannung.

Weiter vorteilhaft ist die Schaltung der Vorrichtung als Querzweig in der Spannungsversorgung zwischen Gleichspannungsquelle und zu schützender Einrichtung. Das bewirkt einen effektiven Schutz für sämtliche Elemente der zu schützenden Einrichtung.

Weitere vorteilhafte Ausgestaltungen sind den Ansprüchen 2 bis 10 zu entnehmen.

Vorteilhaft ist die Wahl einer Schwellspannung, die gemäß Anspruch 4 unterhalb der Zündspannung liegt. Das bewirkt eine beschleunigtes Schaltverhalten der zweiten funktionellen Einheit.

Besonders vorteilhaft ist die Wahl einer Schwellspannung, die gemäß Anspruch 5 unterhalb der Durchbruchsspannung liegt. Das bewirkt, daß der Übergang der zweiten funktionellen Einheit in einen niederohmigen Zustand schon vor Erreichen der Durchbruchsspannung initiiert wird. Zudem wird damit die zweite funktionelle Einheit in einem Arbeitspunkt betrieben, in dem sie eine steilere Kennlinie als in der Umgebung der Schwellspannung aufweist.

Weiter vorteilhaft ist die Wahl einer Schwellspannung, die gemäß Anspruch 6 unterhalb der Nennspannung liegt. Das bewirkt, daß der Übergang der zweiten funktionellen Einheit in einen niederohmigen Zustand schon bei Anliegen der Nennspannung an der zweiten funktionellen Einheit initiiert wird. Zudem wird damit die zweite funktionelle Einheit in einem Arbeitspunkt betrieben, in dem sie eine noch steilere Kennlinie als in der Umgebung der Durchbruchspannung aufweist.

Besonders vorteilhaft ist, die Wahl von Varistoren gemäß Anspruch 7 zur Realisierung der zweiten funktionellen Einheit. Varistoren bieten eine hohe Ableitleistung.

Vorteilhaft ist, mindestens einen Kondensator gemäß Anspruch 8 in der zweiten funktionellen Einheit einzubauen. Dadurch wird die Reaktionszeit der Vorrichtung vermindert, da der mindestens eine Kondensator schon Ladung aufnimmt, nachdem die erste funktionelle Einheit in einen niederohmigen Zustand übergegangen ist und bevor die zweite funktionelle Einheit in einen leitenden Zustand übergeht.

Besonders vorteilhaft ist, die Wahl mindestens eines Strom-und-spannungsabhängigen-Schalters gemäß Anspruch 9 zur Realisierung der ersten funktionellen Einheit. SSS bieten eine hohe Ableitleistung bei einer sehr kurzen Reaktionszeit und einer extrem steilen Kennlinie.

Weiter vorteilhaft ist die Wahl einer ausreichend niedrigen Zündspannung gemäß Anspruch 10. Dies hat den Vorteil, daß man die Unstetigkeitsstelle in der Kennlinie der ersten funktionellen Einheit ausnutzt und so eine extrem steile Kennlinie für die Vorrichtung erhält.

Besonders vorteilhaft ist die Schaltung einer Diode in Sperrichtung parallel zur Vorrichtung gemäß Anspruch 11. Damit ereicht man sowohl einen extrem schnellen Schutz vor Überspannungen mit umgekehrter Polarisierung, als auch einen Verpolungsschutz.

Im folgenden wird die Erfindung anhand von Ausführungsbeispielen und anhand von Figuren näher erläutert. Folgende Figuren zeigen:
- Fig. 1:: ein Blockschaltbild der erfindungsgemäßen Vorrichtung ,
- Fig. 2a:: eine vereinfachte Kennlinie der ersten funktionellen Einheit,
- Fig. 2b:: eine vereinfachte Kennlinie der ersten funktionellen Einheit nach Anspruch 2,
- Fig. 3:: eine vereinfachte Kennlinie der zweiten funktionellen Einheit,
- Fig. 4:: ein Blockschaltbild einer bevorzugten Ausführungsform der erfindungsgemäßen Vorrichtung,
- Fig. 5:: ein Blockschaltbild einer weiteren bevorzugten Ausführungsform der erfindungsgemäßen Vorrichtung und
- Fig. 6:: ein Blockschaltbild einer Ausführungsform einer erfindungsgemäßen Schaltung.

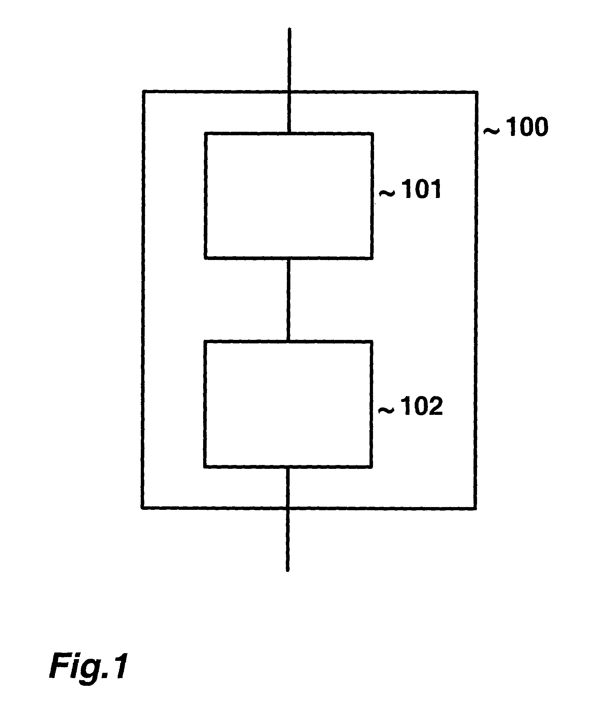

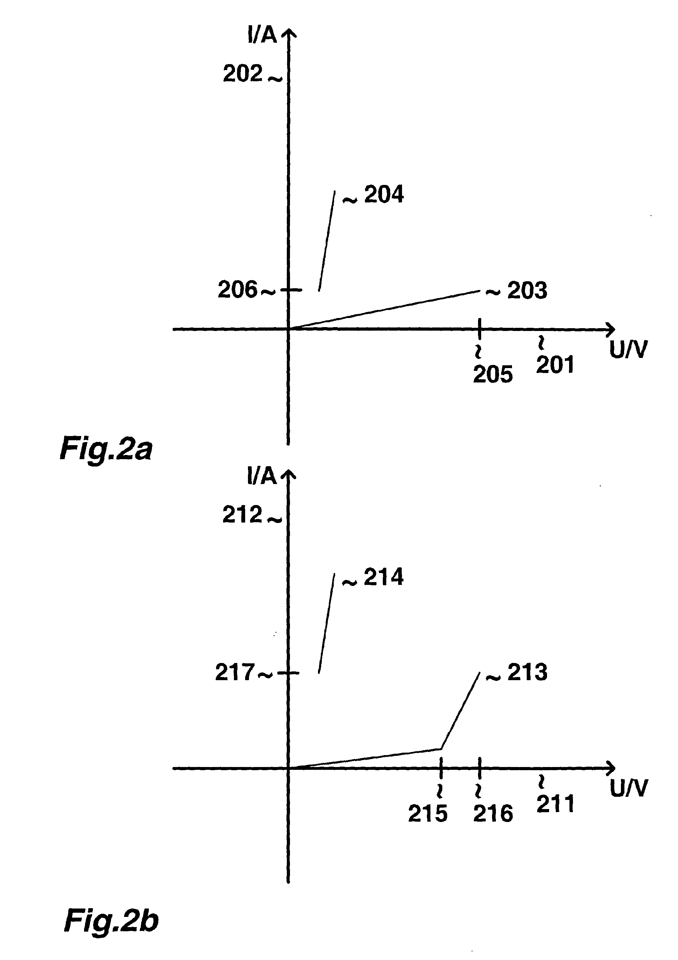

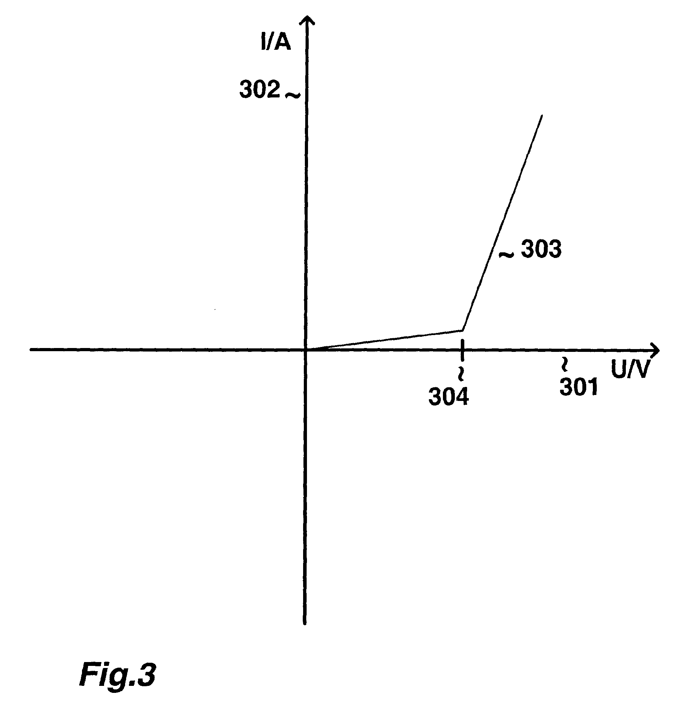

Figur 1 zeigt eine Vorrichtung zum Schutz vor Überspannungen 100 mit zwei funktionellen Einheiten. Die erste funktionelle Einheit 101 und die zweite funktionellen Einheit 102 sind in Reihe geschaltet. Die Eigenschaften der ersten funktionellen Einheit 101 werden anhand der Figuren 2a und 2b näher erläutert. Die Eigenschaften der zweiten funktionellen Einheit 102 werden anhand von Figur 3 näher erläutert. Die funktionellen Einheiten können beispielsweise durch ein gemeinsames Bauteil, durch jeweils ein Bauteil oder durch eine Mehrzahl von Bauteilen realisiert werden.

Die Reihenfolge der in Reihe geschalteten ersten 101 und zweiten 102 funktionellen Einheit ist beliebig. Für die Funktion der Vorrichtung 100 ist es unerheblich, welcher der Anschlüsse der Vorrichtung 100 an den relativ positveren Pol beziehungsweise der Masseverbindung einer Gleichspannungsversorgung angeschlossen wird und welcher Anschluß an den relativ negativeren Pol einer Gleichspannungsversorgung angeschlossen wird.

Die Figuren 2a und 2b zeigen vereinfachte Kennlinien 203; 213 und 204; 214 einer ersten funktionellen Einheit. Die Kennlinien 203; 213 und 204; 214 sind zur besseren Anschaulichkeit insofern vereinfacht, als daß nicht geradlinige Kurvenverläufe als gerade Strecken dargestellt sind. Dabei ist auf der jeweiligen Abzisse 201; 211 in Volt die Spannung U aufgetragen, die an der ersten funktionellen Einheit anliegt, und auf der Ordinate 202; 212 ist in Ampere der Strom I aufgetragen, der durch die erste funktionelle Einheit fließt.

Figur 2a zeigt eine Kennlinie einer ersten funktionellen Einheit gemäß eines der Ansprüche 1 bis 10. Die Kennlinie 203 der ersten funktionellen Einheit stellt den hochohmigen Zustand der Einheit bis zu einer Zündspannung 205 dar. Ab dieser Zündspannung 205 hat die Kennlinie eine Unstetigkeitsstelle. Diese Unstetigkeitsstelle wird durch den, nach Überschreiten der Zündspannung, niederohmigen Zustand der Einheit hervorgerufen. Die Kennlinie setzt sich in der Strecke 204 bei einer niedrigeren Spannung fort. Die niedrigere Spannung ergibt sich aus dem Innenwiderstand der Überspannungsquelle und der hohen Leitfähigkeit der ersten funktionellen Einheit. Damit die erste funktionelle Einheit in ihrem niederohmigen Zustand verbleibt, muß ein Mindeststrom, der sogenannte Haltestrom 206, durch die Einheit fließen. Nach Unterschreiten des Haltestromes kehrt die erste funktionelle Einheit in ihren hochohmigen Zustand zurück.

Figur 2b zeigt eine Kennlinie 213 und 214 einer ersten funktionellen Einheit gemäß Anspruch 2. Die Kennlinie 213 der ersten funktionellen Einheit stellt den hochohmigen Zustand der Einheit bis zu einer Durchbruchsspannung 215 dar. Oberhalb dieser Durchbruchsspannung sinkt der Widerstand der funktionellen Einheit deutlich ab bis zu einer Zündspannung 216. Ab dieser Zündspannung 216 hat die Kennlinie eine Unstetigkeitsstelle. Diese Unstetigkeitsstelle wird durch den nach Überschreiten der Zündspannung sehr niederohmigen Zustand der Einheit hervorgerufen. Die Kennlinie setzt sich in der Strecke 214 bei einer niedrigeren Spannung fort. Die niedrigere Spannung ergibt sich aus dem Innenwiderstand der Überspannungsquelle und der hohen Leitfähigkeit der ersten funktionellen Einheit.

Damit die erste funktionelle Einheit in ihren niederohmigen Zustand verbleibt, muß ein Mindeststrom, der sogenannte Haltestrom 217, durch die Einheit fließen. Nach Unterschreiten des Haltestromes kehrt die erste funktionelle Einheit in ihren hochohmigen Zustand zurück.

Die Strom über Spannungs Kennlinie 303 der zweiten funktionellen Einheit wird in Figur 3 dargestellt. Die Darstellung in Figur 3 ist insofern vereinfacht, daß nicht geradlinige Kurvenverläufe als gerade Strecken dargestellt sind.

Auf der Abzisse 301 ist die Spannung U, die an der zweiten funktionellen Einheit anliegt in Volt aufgetragen und auf der Ordinate 302 der Strom I in Ampere, der durch die zweite funktionelle Einheit fließt. Die Kennlinie der zweiten funktionellen Einheit zeigt den hochohmigen Zustand der Einheit bis zu einer Schwellspannung 304. Oberhalb dieser Schwellspannung wird die zweite funktionelle Einheit zunehmend niederohmig.

Im folgenden werden gleiche Bezugszeichen für gleiche Elemente verwendet.

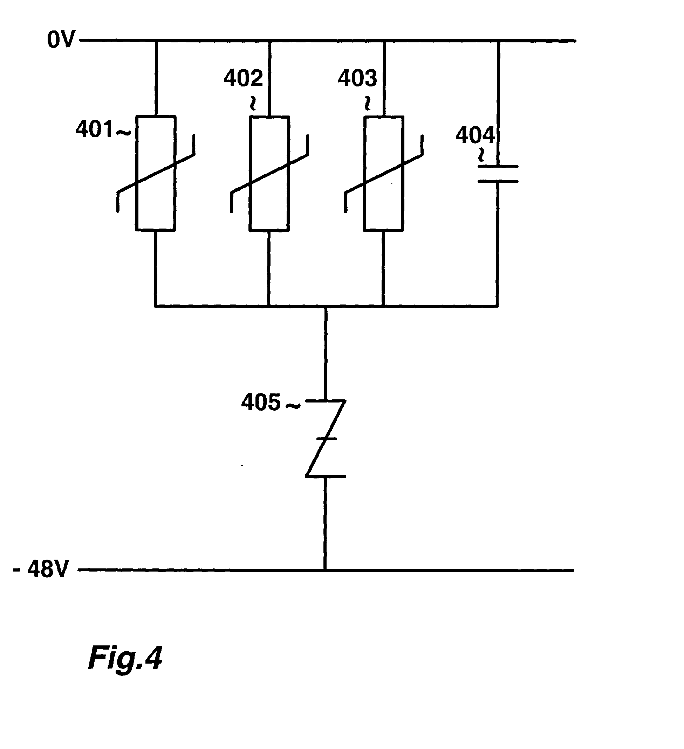

Eine bevorzugte Ausführung der Erfindung wird anhand von Figur 4 erläutert. Die parallel geschalteten Bauelemente 401, 402, 403 und 404 bilden die zweite funktionelle Einheit. Dabei werden die Bauelemente 401, 402 und 403 durch Varistoren, beispielsweise Varistoren der Firma EPCOS mit der Bauteilnummer CN220K35G realisiert. Bauelement 404 stellt mindestens einen Kondensator dar, beispielsweise einen Kondensator von 330 nF. Anstatt eines einzelnen Kondensators kann auch ein Mehrzahl von Kondensatoren verwendet werden.

In Reihe zu der zweiten funktionellen Einheit ist die erste funktionelle Einheit 405 geschaltet. Die erste funktionelle Einheit wird durch mindestens einen sogenannten SSS realisiert, beispielsweise einen SIDACtor™ der Firma Teccor Electronics mit der Bauteilnummer P0640SC.

Die Ausführung der Erfindung ist für eine im Telekommunikationsbereich übliche Nennspannung von 48 Volt Gleichspannung ausgelegt. Dabei liegt an dem, in der Zeichnung unteren, Anschluß des Bauteils 405 eine Spannung von minus 48 Volt und an den, in der Zeichnung oberen, Anschlüssen der Bauteile 401, 402, 403 und 404 eine Spannung von 0 Volt an.

Im Fall einer Überspannung wird die erste funktionelle Einheit 405, realisiert durch den SSS 405 bei Überschreiten einer Spannung von -58V, der Durchbruchsspannung des SSS 405, niederohmig. Vor Überschreiten der Durchbruchsspannung hat der SSS 405 bei circa -55 V einen Widerstand von circa 10 MOhm. Bei Überschreiten einer Spannung von -77 V, der Zündspannung des SSS 405, wird dieser niederohmig mit einem Widerstand von circa 5 Ohm bei einem Ableitstrom von 1 A. Der Widerstand sinkt auf ca. 0,02 Ohm bei einem max. Ableitstrom von 500A.

Nach der Zündung des SSS 405 liegt, abzüglich eines geringen Spannungsverlustes innerhalb des SSS 405 , eine Spannung von ca. -72 V an der zweiten funktionellen Einheit an. Die zweite funktionelle Einheit besteht aus parallel geschalteten Varistoren 401, 402 und 403, sowie mindestens einem Kondensator 404. Die Spannung von ca. -72 V liegt deutlich über der Schwellspannung der gewählten Varistoren CN220K35G. Das bietet den Vorteil, die geringe Steilheit der Kennlinie von Varistoren dadurch zu umgehen, daß einen Arbeitspunkt gewählt wird, an dem ein ausreichend niedriger Innenwiderstand der Varistoren 401, 402, und 403 vorliegt. Bei den gewählten Varistoren 401, 402, und 403 beträgt der Widerstand bei -72 V ca. 480 Ohm. Da in dem Beispiel drei baugleiche Varistoren 401, 402, und 403 parallel geschaltet sind, ergibt sich ein Gesamtwiderstand für die Varistoren 401, 402, und 403 von ca. 160 Ohm. Der Gesamtwiderstand der Reihenschaltung beträgt ca. 165 Ohm, der Strom ca. 0,47A und die Ableitleistung ca. 36W. Der mindestens eine Kondensator 404 wirkt sich zusätzlich günstig auf das Zündverhalten der Vorrichtung aus. Er nimmt bereits über den SSS 405 Ladung auf, während die Varistoren 401, 402, und 403 noch hochohmig sind. Das ist notwendig damit der Haltestrom des SSS 405 überschritten wird.

Nachdem die Varistoren 401, 402, und 403 in einen niederohmigen Zustand übergegangen sind, leitet die Vorrichtung als Querzweig der Gleichspannungsversorgung die Überspannung ab.

Nach Abklingen der Überspannung leiten die Varistoren 401, 402, und 403 bei Anliegen der Nennspannung von -48 V jeweils einen Strom von ca. 0,5 mA. Das ergibt einen Gesamtstrom durch die Vorrichtung von ca. 1,5 mA der deutlich unter dem Haltestrom des SSS 405 von 150 mA liegt. Damit kehrt der SSS 405 in einen hochohmigen Zustand zurück und der Strom durch die Vorrichtung sinkt auf einen Wert nahe 0 A.

Der mindestens eine Kondensator 404 wird über die Varistoren 401, 402, und 403 allmählich entladen

Die Vorteile der erfindungsgemäßen Schaltung gegenüber einer bekannten Schutzschaltung aus drei baugleichen Varistoren mit entsprechend höherer Schwellspannung zeigen sich unter anderem im Vergleich der Überspannungen auf die begrenzt wird. Der direkte Vergleich der vorgestellten Schaltung mit einer Schaltung die beispielsweise Varistoren der Firma EPCOS mit der Bauteilnummer CN2220K50G verwendet ergibt bei einem Ableitstrom von 300A folgendes, die erfindungsgemäße Schaltung begrenzt eine Überspannung auf ca. 130V bei einer Ableitleistung 39KW. Die Begrenzungsschaltung ohne SIDACtor™ begrenzt die Überspannung bei gleichen Bedingungen auf ca. 180V.

Eine Schaltung zum Schutz vor Überspannungen in einer Gleichspannungsversorgung mit einer Nennspannung von -24 V wird beispielsweise realisiert durch die Wahl eines SIDACtor™ der Firma Teccor Electronics mit der Bauteilnummer P0300SC als SSS 405 und die Wahl von Varistoren der Firma EPCOS mit der Bauteilnummer CN2220K17G als Varistoren 401, 402 und 403.

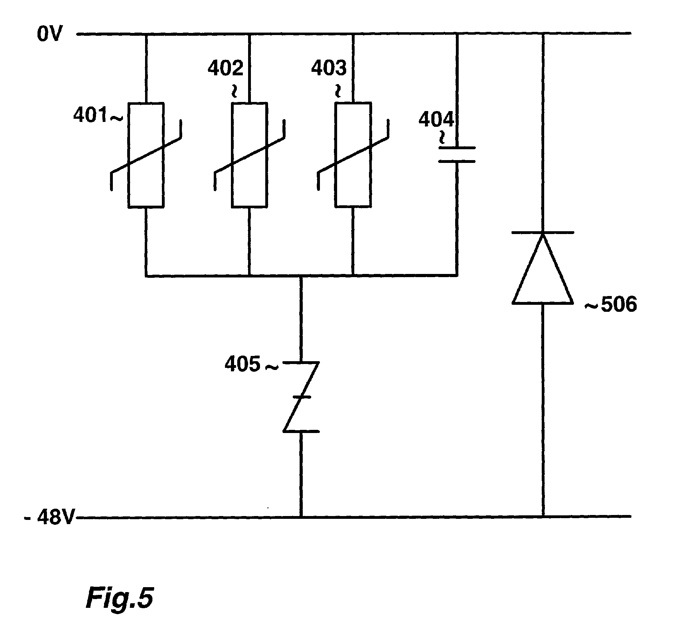

Figur 5 zeigt eine weitere bevorzugte Ausführungsform der Erfindung. Zu der in Figur 4 vorgestellten Ausführungsform ist eine Diode 506 parallel geschaltet. Diese Diode 506 ist bei Anliegen der Nennspannung der Gleichspannungsversorgung in Sperrichtung geschaltet. Sie dient zur Ableitung von Spannungen in Durchlaßrichtung der Diode 506.

Ein Verfahren zur Auslegung einer erfindungsgemäßen Vorrichtung wird beispielsweise wie folgt durchgeführt:

In einem ersten Schritt werden die Kenngrößen der Vorrichtung bestimmt. Kenngrößen von Vorrichtungen sind beispielsweise die Nennspannung der Gleichspannungsversorgung, der erlaubte Querstrom, der bei Nennspannung durch die Vorrichtung fließen darf, die zu begrenzende Transientenenergie, der maximale Stoßstrom und die maximale Überspannung die kurzzeitig an einer zu schützenden Einrichtung anliegen darf, ohne daß die Einrichtung Schaden nimmt.

In einem weiteren Schritt wird mindestens eine mögliche Realisierung der ersten funktionellen Einheit, beispielsweise mindestens ein SSS, gewählt, deren Zündspannung geringer ist als die maximale Überspannung und deren Durchbruchsspannung über der Nennspannung der Gleichstromversorgung liegt.

Anschließend werden die Ableitleistung und der Haltestrom des oder der SSS in einem weiteren Schritt bestimmt. Stehen nach dem vorhergehenden Schritt mehrere SSS zur Auswahl, wird bevorzugt ein SSS mit einem möglichst hohen Haltestrom und einer möglichst hohen Ableitleistung ausgewählt.

In einem nächsten Schritt, wird mindestens eine mögliche Realisierung der zweiten funktionellen Einheit, zum Beispiel ein Varistor, ermittelt, deren Schwellspannung unter der Nennspannung der Gleichspannungsversorgung liegt.

In einem weiteren Schritt werden die Kenngrößen des oder der ermittelten Varistoren bestimmt. Kenngrößen sind beispielsweise, der Strom der bei Nennspannung der Gleichspannungsversorgung durch den Varistor fließt, die maximale Ableitleistung und der Widerstand bei Durchbruchsspannung und Zündspannung.

Anschließend wird ein ein Varistor ausgewählt, der
- einen möglichst geringen Widerstand bei der Durchbruchsspannung aufweist,
- dessen Strom bei Nennspannung deutlich unter dem Haltestrom liegt und
- der eine möglichst hohe Ableitleistung aufweist.
Anstelle eines einzelnen Varistors können auch mehrere Varistoren parallel geschaltet werden. Durch die Parallelschaltung wird der Widerstand der zweiten funktionellen Einheit vermindert und die Ableitleistung erhöht.

Notwendige Bedingung für die Selbstlöschung der Vorrichtung ist, daß bei Nennspannung die Summe der Ströme durch die Varistoren unter dem Haltestrom liegt.

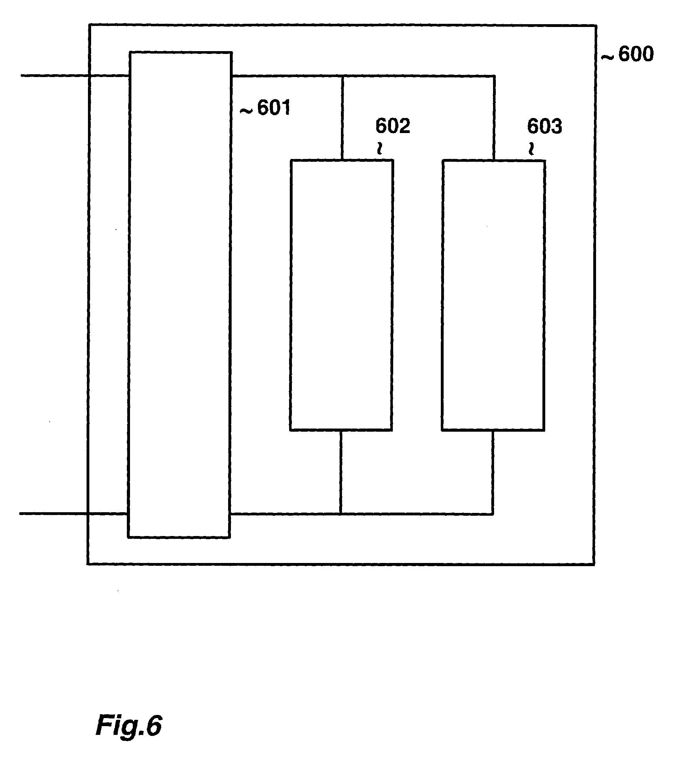

Figur 6 zeigt eine Schaltung 600 mit einer Einrichtung 603, die durch eine erfindungsgemäße Schaltung 602 vor Überspannungen geschützt wird. Eine Wechselspannung wird in einem Transformator mit nachgeschaltetem Gleichrichter 601 in eine Gleichspannung umgesetzt. Anstelle der beschriebenen Umsetzung von Wechselspannung zu Gleichspannung in der Einrichtung, kann eine beliebige Gleichspannungsquelle zur Versorgung der Einrichtung 603 genutzt werden. Vor der zu schützenden Einrichtung 603 bildet die Schaltung 602 einen Querzweig in der Gleichspannungsversorgung.

Die Vorrichtung kann sowohl Teil eines Gerätes sein als auch außerhalb eines Gerätes eingesetzt werden.

## Patentansprüche

1. Vorrichtung zum Schutz vor Überspannungen (100) in einer Gleichspannungsversorgung, mit einer ersten (101) und einer zweiten (102) funktionellen Einheit, die in Reihe geschaltet sind, mit folgenden Eigenschaften, die erste funktionelle Einheit (101) ist hochohmig bis zu einer Zündspannung (205) und nach einem Überschreiten der Zündspannung (205) niederohmig bis ein Haltestrom (206) unterschritten wird, die zweite funktionelle Einheit (102) ist hochohmig bis zu einer Schwellspannung (304) und oberhalb dieser Schwellspannung (304) niederohmig.

2. Vorrichtung gemäß Anspruch 1, bei der die erste funktionelle Einheit (101) bei Überschreiten einer Durchbruchsspannung (215), einer elektrischen Spannung unterhalb der Zündspannung (216, 205), einen deutlich geringeren elektrischen Widerstand aufweist als unterhalb der Durchbruchsspannung (215).

3. Vorrichtung nach Anspruch 1 oder 2, bei der die funktionellen Einheiten so realisiert werden, daß die Vorrichtung bei Nennspannung vor einem Überschreiten der Zündspannung einen sehr geringen Strom durchläßt, bei einem Überschreiten der Zündspannung einen hohen Strom durchläßt, bis eine an der Vorrichtung anliegende Spannung auf einen Wert nahe der Nennspannung absinkt, und dann erneut einen sehr geringen Strom durchläßt.

4. Vorrichtung nach einem der Ansprüche 1, 2 oder 3, bei der die Schwellspannung (304) unterhalb der Zündspannung (205, 216) liegt.

5. Vorrichtung nach einem der Ansprüche 1 bis 4, bei der die Schwellspannung (304) unterhalb der Durchbruchsspannung (215) liegt.

6. Vorrichtung nach einem der Ansprüche 1 bis 5, bei der die Schwellspannung (304) unterhalb der Nennspannung der Gleichspannungsversorgung liegt.

7. Vorrichtung nach einem der Ansprüche 1 bis 6, bei der die zweite funktionelle Einheit (102) durch mindestens einen Varistor (401, 402, 403) realisiert wird.

8. Vorrichtung nach Anspruch 7, bei der die zweite funktionelle Einheit zusätzlich mindestens einen Kondensator (404) enthält.

9. Vorrichtung nach einem der Ansprüche 1 bis 8, bei der erste funktionelle Einheit durch mindestens einen Strom-und-spannungsabhängigen-Schalter (405, 505) realisiert wird.

10. Vorrichtung nach einem derAnsprüche 1 bis 10, bei der parallel zu den funktionellen Einheiten eine Diode (506) geschaltet ist, deren Kathode mit dem relativ positiveren Pol der Gleichspannungsversorgung und deren Anode mit dem relativ negativeren Pol der Gleichspannungsversorgung leitend verbunden ist.

11. Schaltung (600) mit einer Vorrichtung (602) gemäß einem der Ansprüche 1 bis 10, bei der die Vorrichtung (602) in einer Gleichspannungsversorgung parallel zu einer zu schützenden Einrichtung (603) geschaltet wird, so daß die Vorrichtung (602) einen Querzweig in der Gleichspannungsversorgung zwischen Gleichspannungsquelle (601) und zu schützender Einrichtung (603) bildet.
